## Europäisches Patentamt

## European Patent Office

## Office européen des brevets

(19)

(11) Veröffentlichungsnummer: **0 117 912 B1**

(12)

# EUROPÄISCHE PATENTSCHRIFT

(45) Veröffentlichungstag der Patentschrift:
08.10.86

(51) Int. Cl.⁴: **C 08 G 63/38,** C 08 G 63/34, C 08 K 5/52

(21) Anmeldenummer: 83112290.8

(22) Anmeldetag: 07.12.83

(54) Verfahren zur Herstellung von hellfarbigen Polyestern unter Verwendung von Titankatalysatoren.

(30) Priorität: 07.01.83 DE 3300315

(43) Veröffentlichungstag der Anmeldung:
12.09.84 Patentblatt 84/37

(45) Bekanntmachung des Hinweises auf die Patenterteilung:
08.10.86 Patentblatt 86/41

(84) Benannte Vertragsstaaten:
AT BE CH DE FR GB IT LI LU NL SE

(56) Entgegenhaltungen:
EP - A - 0 006 603
AT - B - 263 371
DE - A - 2 523 910

(73) Patentinhaber: DYNAMIT NOBEL
AKTIENGESELLSCHAFT, Postfach 1209,
D-5210 Troisdorf, Bez. Köln (DE)

(72) Erfinder: Kühnrich, Robert, Kiesenfeldweg 69,
D-4353 Oer-Erkenschwick (DE)
Erfinder: Elmenthaler, Bernd, Hellerstrasse 56,
D-4600 Dortmund (DE)
Erfinder: Schade, Gerhard, Dr., Akazienweg 13,
D-5810 Witten (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Es ist bekannt, aus mehrfunktionellen Alkoholen d.h. Diolen, Triolen bzw. Polyolen und mehrbasischen Carbonsäuren, d.h. Di-, Tri- bzw. Polycarbonsäuren oder deren Derivaten, amorphe oder kristalline Polyester mit dem jeweiligen Verwendungszweck angepasssten Eigenschaften herzustellen.

Erfolgt eine mehrstufige Synthese, so kann die erste Stufe als Umesterungsreaktion unter Einsatz von Niedrigalkylestern, besonders Methylestern der Carbonsäuren, die zweite Stufe als Veresterungsreaktion unter Einsatz oder Mitverwendung von Carbonsäuren und die dritte als Polykondensationsreaktion ausgeführt werden. Werden keine Ester von Carbonsäuren verwendet, beginnt die Herstellung mit der Veresterung. Jede dieser Stufen erfordert im Regelfalle verschiedene Katalysatoren, da die Umesterungs- bzw. Veresterungskatalysatoren des Zinks, Cadmiums, Mangans oder Calciums entweder die Veresterungs- oder die Polykondensationsreaktion nur unzureichend beschleunigen oder in den für die Veresterungs- oder Polykondensationsreaktion erforderlichen, im Vergleich zu der Umesterungsreaktion oder Veresterungsreaktion höheren Konzentrationen nicht nur die Polykondensationsreaktion, sondern auch Zersetzungsreaktionen mit der Folge von u.a. Verfärbungen bewirken. Mit steigendem Gehalt an Zersetzungsprodukten in den Polykondensaten verschlechtern sich aber deren Gebrauchseigenschaften.

Deshalb wird nach dem Stand der Technik die Konzentration der Umesterungs- und/oder Veresterungskatalysatoren so niedrig gehalten, wie für einen ungestörten Verlauf der jeweiligen Reaktion erforderlich oder der Katalysator der Umesterungs- bzw. Veresterungsstufe nach der Umsetzung desaktiviert, beispielsweise durch Zugabe von Phosphorverbindungen wie Phosphorsäure, phosphoriger Säure, unterphosphoriger Säure, Phosphinsäure oder deren Ester bzw. deren Salze, und die Polykondensation nach Zugabe eines anderen Katalysators ausgeführt.

Geeignete Katalysatoren für die Polykondensation sind aus R.E. Wilfang, I. Polymer Sci. 54 (1961) 388 in grosser Zahl bekannt. Lösliche Antimonverbindungen werden wegen guter katalytischer Wirkung häufig besonders für die Stufe der Polykondensation verwendet. Sie haben aber den Nachteil, leicht durch Reduktion metallisches Antimon zu bilden, das das Polykondensat graustichig verfärbt.

Verbindungen anderer Metalle sind aber weniger aktive Polykondensationskatalysatoren, erfordern höhere molare Mengen oder längere Reaktionszeiten bis zur Erreichung bestimmter Molgewichte, katalysieren Neben- oder Zersetzungsreaktionen stärker als Antimonverbindungen bzw. erfordern die Zugabe der genannten Phosphorverbindungen zur Desaktivierung.

Nun ist es auch bekannt, lösliche Titanverbindungen als Polykondensationskatalysatoren zu verwenden. Nach H. Zimmermann, Faserforschung u. Textiltechnik 13 Nr. 11 (1962), 481 bis 490 ist deren katalytische Aktivität den Antimonverbindungen vergleichbar und Nebenreaktionen sind wenig störend.

Titanverbindungen haben aber den Nachteil, die Polykondensate gelbbraun zu verfärben, besonders bei Äthylenglykol als Bestandteil der Polyester.

Es bestand daher die Aufgabe, die durch Titankatalysatoren bewirkte Verfärbung der Polykondensate zu vermindern und nach Möglichkeit die Wirksamkeit von Titankatalysatoren zu steigern.

Gegenstand der Erfindung ist daher ein Verfahren zur Herstellung von Polyestern aus mehrfunktionellen Alkoholen und mehrbasischen Carbonsäuren und/oder deren Alkylestern und/oder deren Anhydriden in Gegenwart von katalytisch wirksamen Titanverbindungen, in Gegenwart von Verbindungen der phosphorigen Säure sowie ggf. weiteren bekannten Umesterungs-, Veresterungs- und Polykondensations-Katalysatoren und weiteren Hilfsstoffen, dadurch gekennzeichnet, dass als Verbindungen der phosphorigen Säure katalytische Mengen von Addukten aus phosphoriger Säure und Monoepoxiden mit Molverhältnissen der Komponenten von 1:1, 1:2 oder 1:3 verwendet werden.

Zwar sind aus EP-A1-6603 Triester der Phosphorsäure mit Glykolen und aus AT-B-263371 Polyester aus Glykolen und phosphoriger Säure als Stabilisatoren zur Verbesserung der Licht- bzw. Thermostabilität von Polyestern bekannt, jedoch ist dort nicht die Steigerung der Wirksamkeit von Titankatalysatoren bei der Polyesterbildung beschrieben.

Als Titankatalysatoren werden dabei an sich beliebige bekannte Titankatalysatoren verstanden, vorzugsweise Titanester aliphatischer oder cycloaliphatischer Alkohole mit 3 bis 12, insbesondere 4 bis 10 C-Atomen wie Butyltitanat und Octyltitanat, sowie lösliche Titan-Chelate aus beispielsweise 1,3-Diolen, insbesondere mit 2,2,4-Trimethylpentandiol--1,3, 2-Methylpentandiol-2,4 oder 2-Äthylhexandiol-1,3. Die zusätzlich zu den Titankatalysatoren verwendeten Addukte sind besonders für die Veresterungsstufe und in gleichem Masse für die anschliessende Polykondensationsstufe geeignet. Polyester von geringerem und besonders von hohem Polykondensationsgrad können mit ihrer Hilfe hergestellt werden.

Die Addukte erlauben es, anstelle von stark verfärbten Polyestern hellfarbige Polyester mit sehr niedrigen Farbzahlen herzustellen.

Überraschend steigern die Addukte die Wirksamkeit der Titankatalysatoren, so dass die Reaktionszeit der Veresterung mit steigender Menge der Addukte und mit steigender Menge der Epoxide im Addukt teilweise stark verkürzt wird, der Kondensationsgrad erhöht wird und die Vollständigkeit der Reaktion, messbar an verminderten Carboxyzahlen, Säurezahlen bzw. Hydroxylzahlen, gesteigert wird. Von besonderem Wert ist eine Absenkung der Säurezahlen im fertigen Polyester auf sehr geringe Werte.

In der Polykondensationsstufe bewirken die Addukte eine deutliche, zum Teil sehr erhebliche Erhöhung der Viskosität und damit des Molargewichts, wobei erhöhte Viskositäten teils durch erhöhten Zusatz der Addukte, besonders aber durch erhöhte Mengen Monoepoxid im Addukt erzielt werden. Die Addukte werden daher bevorzugt in der Veresterungsstufe und nachfolgend in der Polykondensationsstufe eingesetzt und ermöglichen somit, zusammen mit der Titanverbindung allein in der gegebenenfalls vorangehenden Umesterungsstufe, die Verwendung eines einzigen Katalysators für die gesamte Polyesterherstellung.

Die Veresterung in der Veresterungsstufe ist wesentlich vollständiger als bisher erreichbar, gemessen am abdestillierten Wasser, bevor durch Temperaturerhöhung und Druckverminderung die Polykondensation eingeleitet wird.

Die Menge der Addukte kann je 0,001 g Titankatalysator 0,2 bis 1,8 g, vorzugsweise 0,3 bis 1,5 g, Addukt betragen.

Die Herstellung der Addukte kann in inerten Lösungsmitteln, vorzugsweise jedoch lösungsmittelfrei, erfolgen, wobei das jeweilige Monoepoxid unter Stickstoffatmosphäre in einem Rundkolben mit aufgesetzter Kolonne unter Rühren auf Temperaturen bis 200°C, vorzugsweise auf 70 bis 100°C, erwärmt wird. Die Zugabe der phosphorigen Säure, vorzugsweise als 99%ige phosphorige Säure, erfolgt in Portionen oder kontinuierlich, wobei wegen exothermer Reaktionen erforderlichenfalls zu kühlen ist. Eine Nachreaktionszeit bei Temperaturen von 60 bis 90° kann sich anschliessen.

Addukte mit Molverhältnissen von phosphoriger Säure und Monoepoxid von 1:1, 1:2 oder 1:3 werden hergestellt und verwendet. Als Monoepoxide kommen beliebige bekannte Monoepoxide infrage, insbesondere die Glycidylester aliphatischer oder cycloaliphatischer Carbonsäuren, die Glycidyläther von Monoalkoholen und ggf. Alkylphenolen sowie Alkenoxide und ggf. Cycloalkenoxide mit bevorzugt 5 bis 10 C-Atomen.

Monoepoxide mit relativ hochliegenden Siedepunkten werden bevorzugt.

Bevorzugte Epoxide sind Glycidylester von Fettsäuren mit 6 bis 15 C-Atomen. Der Glycidylester aus verzweigtkettigen gesättigten Fettsäuren eines Gemisches mit 8 bis 10 C-Atomen wird in den Beispielen kurz «PC» unter Hinzufügung der Molverhältnisse genannt («Cardura E.»® Shell).

Weiter bevorzugt sind Glycidyläther aus gesättigten aliphatischen Alkoholen mit 4 bis 6 C-Atomen, und Alkenoxide, d.h. Epoxide aus geradkettigen aliphatischen Alkenen mit beliebiger Lage der Doppelbindung mit 8 bis 12 C-Atomen.

Die Komponenten der verfahrensgemäss hergestellten Mischpolyester können alle bekannten aliphatischen, cycloaliphatischen bzw. aromatischen Diole, ggf. Triole und Polyole sowie aliphatische, cycloaliphatische bzw. aromatische Dicarbonsäuren sowie ggf. Tri- und Polycarbonsäuren sowie deren Derivate, insbesondere deren Ester von $C_1$- bis $C_4$-Alkoholen sowie deren Anhydride umfassen.

Der erreichte Polykondensationsgrad wird als reduzierte Viskosität $\eta$ red. = $\eta$ rel. —1 bei der Konzentration von 1 g Polymer in 100 ml Lösung aus Phenol und 2,2,4,4-Tetrachloräthan im Gewichtsverhältnis 3:2 bei 25°C gemessen.

Die Bestimmung des Schmelzpunkt-Peaks ($T_S$) des Rekristallisations-Peaks ($T_R$) und des Glaspunktes ($T_G$) wurde mit einem Differentialkalorimeter, Mod. DSC 1 der Fa. Perkin-Elmer, durchgeführt.

Die Endgruppenkonzentration wird durch Säurezahl SZ, Hydroxylzahl OHZ, beide in mg KOH/g, bzw. die Carboxylzahl (C) in mVal.COOH/kg Polymer nach H. Pohl, Analytic. Chem. 26 (1954), 1614, gemessen.

Die Gardner-Farbzahl (GFZ) der fliessfähigen oder geschmolzenen Polyester wurde nach DIN 6961 bestimmt.

In den Beispielen 1 bis 12 sowie im Vergleichsbeispiel A wurden die Bedingungen der eigentlichen Polykondensation mit 4 Stunden bei 270°C bei Vakuum von 0,1 mbar gleichgehalten, um den Einfluss der Addukte auf Zersetzung und Verfärbung anhand der Farbzahl unter gleicher und in der Praxis vielfach auftretender vergleichsweise hoher Temperaturbelastung zu zeigen. Ebenfalls aus Gründen der Vergleichbarkeit wurde überwiegend als Katalysator Tetrabutyltitanat verwendet, obgleich weitere lösliche Titankatalysatoren in gleichem Masse verwendet werden können.

### Beispiel 1

97 g Dimethylterephthalat, 40,73 g Äthylenglykol, 60,63 g Neopentylglykol und 0,0082 g Butyltitanat wurden unter Reinstickstoff sowie unter Rühren in 3 Std. bei 160-190°C umgeestert, wobei 40 ml Methanol abdestilliert worden waren. Sodann wurden 83 g Isophthalsäure und 0,485 g = 0,0016 Mol Addukt PC 1:1 zugesetzt. Dadurch kühlte das Umesterungsprodukt auf = 160°C ab. Der Kolbeninhalt wurde nun innerhalb von 150 Min. auf 180°C aufgeheizt, wobei zugleich 18 ml Wasser abdestillierten. Danach wurde die Temperatur im Verlauf von 1,5 Std. auf 270°C erhöht und zugleich der Druck innerhalb dieser Zeit auf 0,1 mbar erniedrigt. Nach weiteren 4 Std. unter diesen Bedingungen wurde die Polykondensation durch Aufheben des Vakuums beendet. Das so erhaltene Produkt wies folgende Kennzahlen auf:

| | | |
|---|---|---|
| Viskosität | $\eta$ red. | 0,616 |
| Glaspunkt | $T_G$ | 56°C |
| Carboxylzahl | C | 28 mVal/kg |
| Gardner-Farbzahl | (GFZ) | 2 |

### Vergleichsbeispiel A

Es wurde wie in Beispiel 1 in Gegenwart von 0,0082 g Butyltitanat verfahren, jedoch das Addukt PC 1:1 durch 0,0016 Mol = 0,496 g Triphenylphosphit ersetzt. Das so erhaltene Produkt hatte folgende Kennzahlen:

| | | |
|---|---|---|
| Veresterungsreaktionszeit | | 180 Min. |
| | $\eta$ red. | 0,632 |
| | $T_G$ | 56°C |
| | C | 35 mVal/kg |
| | GFZ | über 12 |

### Beispiel 2

Es wurde wie in Beispiel 1 verfahren, wobei das PC 1:1 = 0,0016 Mol durch a) 0,842 g PC 1:2 = 0,0016 Mol bzw. b) 1,225 g PC 1:3 = 0,0016 Mol, ersetzt wurde.

Die so erhaltenen Produkte hatten folgende Kennzahlen:

|  | a) | b) |
|---|---|---|
| Veresterungs-reaktionszeit | 110 Min. | 90 Min. |
| η red. | 0,820 | 0,835 |
| TG | 56°C | 56°C |
| C | 24 mVal/kg | 17 mVal/kg |
| GFZ | 1-2 | 1 |

### Beispiel 3

106,7 g Dimethylterephthalat, 80,6 g Äthylenglykol und 0,0082 g Butyltitanat wurden wie in Beispiel 1 umgeestert. Dabei fielen 44 ml Methanol an. Sodann wurden 84,6 g Azelainsäure und 0,485 g = 0,0016 Mol PC 1:1 zugesetzt und wie in Beispiel 1 verestert, wobei 16,2 ml Wasser abdestillierten. Danach wurde wie in Beispiel 1 polykondensiert. Das Produkt hatte die Kennzahlen: η red. 0,95, TG —5°C, C 19 und GFZ 3.

### Beispiel 4

Es wurde wie in Beispiel 3 verfahren, wobei das PC 1:1 = 0,0016 Mol durch folgende Addukte ersetzt wurde:
a) 0,842 g PC 1:2 = 0,0016 Mol
b) 1,225 g PC 1:3 = 0,0016 Mol.

Die so erhaltenen Produkte hatten folgende Kennzahlen:

|  | a) | b) |
|---|---|---|
| Veresterungs-reaktionszeit | 90 Min. | 90 Min. |
| η red. | 1,01 | 0,998 |
| TG | —5°C | —5°C |
| C | 17 mVal/kg | 19 mVal/kg |
| GFZ | 2 | 2 |

### Beispiel 5

116,4 g Dimethylterephthalat, 45,88 g Äthylenglykol, 66,24 g Cyclohexandimethanol und 0,0082 g Butyltitanat wurden wie in Beispiel 1 umgeestert, wobei 48 ml Methanol abdestillierten. Danach wurden 66,4 g Terephthalsäure und 0,485 g = 0,0016 Mol PC 1:1 zugesetzt und wie in Beispiel 1 verestert, wobei 14 ml Wasser abdestillierten. Wie in Beispiel 1 wurde danach polykondensiert. Das Produkt hatte die Kennzahlen: η red. 0,89, TG 84°C, C 31 und GFZ 2.

### Beispiel 6

Es wurde wie in Beispiel 5 verfahren, wobei das PC 1:1 = 0,0016 Mol durch a) 0,842 g PC 1:2 = 0,0016 Mol bzw. b) 1,225 g PC 1:3 = 0,0016 Mol ersetzt wurde.

Die so erhaltenen Produkte hatten folgende Kennzahlen:

|  | a) | b) |
|---|---|---|
| Veresterungs-reaktionszeit | 140 Min. | 90 Min. |
| η red. | 0,932 | 0,948 |
| TG | 84 | 84 |
| C | 32 mVal/kg | 29 mVal/kg |
| GFZ | 1-2 | 1-2 |

### Beispiel 7

33,2 Isophthalsäure, 116,8 g Adipinsäure, 52,08 g Äthylenglykol, 38,94 g Hexandiol-1,6, 0,0082 g Butyltitanat und 0,485 g = 0,0016 Mol PC 1:1 wurden unter Reinstickstoff sowie unter Rühren innerhalb von 190 Minuten bei 160-180°C verestert, wonach 36 ml Wasser abdestilliert waren. Danach wurde wie in Beispiel 1 die Polykondensation durchgeführt. Das so erhaltene Produkt hatte die Kennzahlen: η red. 0,663, TG —51°C, C 35 und GFZ 4.

### Beispiel 8

Es wurde wie in Beispiel 7 verfahren, wobei das PC 1:1 = 0,0016 Mol durch a) 0,842 g PC 1:1 = 0,0016 Mol und b) 1,225 g PC 1:3 = 0,0016 Mol ersetzt wurde.

Die so erhaltenen Produkte hatten folgende Kennzahlen:

|  | a) | b) |
|---|---|---|
| Veresterungs-reaktionszeit | 160 Min. | 140 Min. |
| η red. | 0,732 | 0,797 |
| TG | —51°C | —51°C |
| C | 34 mVal/kg | 28 mVal/kg |
| GFZ | 2 | 1-2 |

### Beispiel 9

135,8 g Dimethylterephthalat, 97,2 g Butandiol-1,4, 9,99 g Äthylenglykol, 16,77 g Neopentylglykol und 0,0082 g Butyltitanat wurden wie in Beispiel 1 umgeestert, wobei 56 ml Methanol anfielen. Danach wurden 60,65 g Sebacinsäure und 0,485 g = 0,0016 Mol PC 1:1 zugesetzt und wie in Beispiel 1 verestert; hierbei destillierten 10,8 ml Wasser über. Sodann wurde wie in Beispiel 1 polykondensiert. Das Produkt hatte die Kennzahlen: η red. 1,67 , $T_S$ 153°C, $T_R$ 80°C, C 14 und GFZ 3-4.

### Beispiel 10

Es wurde wie in Beispiel 9 verfahren, wobei das PC 1:1 = 0,0016 Mol durch a) 0,842 g PC 1:2 = 0,0016 Mol und b) 1,225 g PC 1:3 = 0,0016 Mol ersetzt wurde.

Die so erhaltenen Produkte hatten folgende Kennzahlen:

|  | a) | b) |
|---|---|---|
| Veresterungs-reaktionszeit | 130 Min. | 160 Min. |
| η red. | 1,58 | 1,60 |
| $T_S$ | 153°C | 153°C |
| $T_R$ | 80°C | 80°C |
| C | 15 mVal/kg | 13 mVal/kg |
| GFZ | 2 | 2 |

### Beispiel 11

126,1 g Dimethylterephthalat, 99,0 g Butandiol-1,4, 38,46 g Tripropylenglykol und 0,0082 g Butyltitanat wurden wie in Beispiel 1 umgeestert, wobei 52 ml Methanol anfielen. Danach wurden 51,1 g Adipinsäure und 0,485 g = 0,0016 Mol PC 1:1 zugesetzt und wie in Beispiel 1 verestert. Dabei destillierten 12,6 ml Wasser über. Danach wurde wie in Beispiel 1 polykondensiert. Das Produkte hatte die Kennzahlen: η red. 0,78, $T_S$ 137°C, $T_R$ 70°C, C 34 und GFZ 4.

### Beispiel 12

Es wurde wie in Beispiel 11 verfahren, wobei das PC 1:1 = 0,0016 Mol durch a) 0,842 g PC 1:2 = 0,0016 Mol, b) 1,225 g PC 1:3 = 0,0016 Mol ersetzt wurde.

Die so erhaltenen Produkte hatten folgende Kennzahlen:

|  | a) | b) |
|---|---|---|
| Veresterungs-reaktionszeit | 130 Min. | 130 Min. |
| $\eta$ red. | 0,86 | 0,84 |
| $T_S$ | 137°C | 137°C |
| $T_R$ | 70°C | 70°C |
| C | 29 mVal/kg | 31 mVal/kg |
| GFZ | 2 | 2 |

### Vergleichsbeispiel B

67,5 g Butandiol und 222 g Phthalsäureanhydrid wurden unter Reinstickstoff sowie unter Rühren 50 Min. bei 90-100°C gehalten, wobei sich Butylendiphthalat mit einer SZ von 295 mg KOH/g bildete. Danach wurden 0,195 g Butyltitanat, 31 g Äthylenglykol, 56,18 g Diäthylenglykol, 185,12 Neopentylglykol, 43,8 g Adipinsäure und 199,2 g Isophthalsäure zugesetzt. Der Kolbeninhalt wurde nun innerhalb von 4 Std. auf 220°C geheizt, wobei zugleich 78 ml Wasser überdestillierten. Bei 220°C wurde nach 30 Minuten ein Vakuum von 300 mbar angelegt und danach innerhalb von 2 Std. auf 8 mbar gesenkt. Nach 1 Std. unter diesen Bedingungen wurde die Kondensation beendet. Das Produkt hatte die Kennzahlen: $\eta$ red. 0,270, SZ 16, OHZ 32 und GFZ 12-13.

### Beispiel 13

Es wurde wie in Vergleichsbeispiel B verfahren, wobei folgende Addukte in der Veresterungsreaktionsstufe zugesetzt wurden: a) PC 1:1 = 0,036 Mol, b) PC 1:2 = 0,036 Mol, c) PC 1:3 = 0,036 Mol.

Die so erhaltenen Produkte hatten folgende Kennzahlen:

|  | a) | b) | c) |
|---|---|---|---|
| $\eta$ red. | 0,265 | 0,282 | 0,297 |
| SZ | 8 mg KOH/g | < 1 mg KOH/g | < 1 mg KOH/g |
| OHZ | 36 mg KOH/g | 33 mg KOH/g | 34 mg KOH/g |
| GFZ | 3-4 | 1-2 | 1-2 |

### Vergleichsbeispiel C

99,6 g Isophthalsäure, 355,2 g Phthalsäureanhydrid, 108,0 g Butandiol-1,4, 169,52 g Neopentylglykol, 45,26 g Äthylenglykol und 0,195 g Butyltitanat wurden innerhalb von 5 Std. unter Reinstickstoff und Rühren auf 220°C aufgeheizt. Dabei destillierten 62 ml Wasser über. Danach wurde ein Vakuum von 200 mbar angelegt. Nach 2,5 Std. unter diesen Bedingungen wurde die Kondensation beendet.

Das erhaltene Produkt hatte folgende Kennzahlen: $\eta$ red. 0,225, SZ 18, OHZ 37 und GFZ 9.

### Beispiel 14

Es wurde wie in Vergleichsbeispiel C verfahren, wobei in der Veresterungsreaktionsstufe: a) PC 1:1 = 0,036 Mol, b) PC 1:2 = 0,036 Mol, c) PC 1:3 = 0,036 Mol zugesetzt wurden.

Die so erhaltenen Produkte hatten folgende Kennzahlen:

|  | a) | b) | c) |
|---|---|---|---|
| $\eta$ red. | 0,232 | 0,240 | 0,244 |
| SZ | 10 mg KOH/g | < 1 mg KOH/g | < 1 mg KOH/g |
| OHZ | 35 mg KOH/g | 32 mg KOH/g | 35 mg KOH/g |
| GFZ | 3 | 1-2 | 1-2 |

### Beispiel 15

Es wurde wie in Vergleichsbeispiel B verfahren, wobei folgende Addukte in der Veresterungsstufe zugesetzt wurden: a) Addukt aus phosphoriger Säure/Dodecen-1-oxid (im folgenden als PD bezeichnet) im Molverhältnis 1:1 = 0,036 Mol, b) 1:2 = 0,036 Mol und c) 1:3 = 0,036 Mol.

Die so erhaltenen Produkte hatten folgende Kennzahlen:

|  | a) | b) | c) |
|---|---|---|---|
| $\eta$ red. | 0,272 | 0,266 | 0,281 |
| SZ | 7 mg KOH/g | < 1 mg KOH/g | < 1 mg KOH/g |
| OHZ | 37 mg KOH/g | 38 mg KOH/g | 33 mg KOH/g |
| GFZ | 4 | 1-2 | 1-2 |

### Beispiel 16

Es wurde wie in Vergleichsbeispiel B verfahren, wobei in der Veresterungsstufe a) das Addukt aus phosphoriger Säure/n-Butylglycidyläther (als PB bezeichnet) im Mol-Verhältnis 1:1 = 0,036 Mol b) PB im Mol-Verhältnis 1:2 = 0,036 Mol und c) PB im Mol-Verhältnis 1:3 = 0,036 Mol zugesetzt wurden.

Die so erhaltenen Produkte hatten folgende Kennzahlen:

|  | a) | b) | c) |
|---|---|---|---|
| $\eta$ red. | 0,253 | 0,261 | 0,269 |
| SZ | 9 mg KOH/g | < 1 mg KOH/g | < 1 mg KOH/g |
| OHZ | 40 mg KOH/g | 32 mg KOH/g | 34 mg KOH/g |
| GFZ | 4-5 | 1-2 | 1-2 |

## Patentanspruch

Verfahren zur Herstellung von Polyestern aus mehrfunktionellen Alkoholen und mehrbasischen Carbonsäuren und/oder Alkylestern und/oder Anhydriden davon in Gegenwart von katalytisch wirksamen Titanverbindungen, in Gegenwart von Verbindungen der phosphorigen Säure sowie ggf. weiterer bekannten Umesterungs-, Veresterungs- und Polykondensations-Katalysatoren und weiterer Hilfsstoffen, dadurch gekennzeichnet, dass als Verbindungen der phosphorigen Säure katalytische Mengen von Addukten aus phosphoriger Säure und Monoepoxiden mit Molverhältnissen der Komponenten von 1:1, 1:2 oder 1:3 verwendet werden.

## Claim

Process for the production of polyesters from polyfunctional alcohols and polyfunctional carboxylic acids and/or alkyl esters and/or anhydrides thereof in the presence of catalytically active titanium compounds, in the presence of compounds of phosphorous acid as well as optionally further known trans-esterification, esterification and polycondensation catalysts and further auxiliary substances, characterised in that, as compounds of phosphorous acids, there are used catalytic amounts of adducts of phosphorous acid and monoepoxides with molar ratios of the components of 1:1, 1:2 or 1:3.

**Revendication**

Procédé pour la fabrication de polyesters à partir de polyalcools et d'acides polycarboxyliques, et/ou de leurs esters alkyliques et/ou de leurs anhydrides, en présence de composés du titane à effet catalytique, en présence de composés de l'acide phosphoreux et éventuellement d'autres catalyseurs connus de transestérification, d'estérification et de polycondensation, et d'autres produits auxiliaires, caractérisé en ce qu'on utilise comme composés de l'acide phosphoreux des quantités catalytiques de produits d'addition de l'acide phosphoreux et de monoépoxydes, avec, entre les constituants, des rapports molaires de 1:1, 1:2 ou 1:3.